# EUROPEAN PATENT APPLICATION

(11) **EP 3 379 006 A1**
(43) Date of publication of application: **26.09.2018**
(21) Application number: 17162906.6
(22) Date of filing: 24.03.2017
(51) Int. Cl.: E04G 21/24, E01F 8/00, E04B 1/82, G10K 11/168, D06M 15/00

(54) **FIREPROOF ACOUSTIC BARRIER**

(71) Applicant: RVT GROUP LIMITED, Dartford DA1 5BS (GB)
(72) Inventor: CHATTELL, Timothy, Dartford, Kent DA1 5BS (GB)
(74) Representative: Finnegan Europe LLP

(57) **Abstract**

An acoustic curtain comprising a panel of sound absorbent material within an envelope formed from polymeric sheets, with means for attaching adjacent panels to one another, and wherein the polymeric sheets comprise a woven glass fibre fabric coated or impregnated with a halogen free polymeric material comprising polyurethane and aluminium.

## Description

### FIELD OF INVENTION

This invention relates to a fire-proof acoustic curtain for containing noise, particularly for sub surface projects.

### BACKGROUND ART

Construction companies and owners of industrial sites are becoming increasingly faced with issues relating to noise pollution, particularly on sensitive sites such as underground transport networks which are enclosed or have limited escape routes in the event of a fire or other potential hazards.

Acoustic barriers which include flame retardant materials are found in for example GB 2472 309, US 4193474, US 6382350, WO 00/23688, US 4832152 and GB 2527111 and EP 2916316. However, these barriers often use halogen containing flame retardants or other such materials which do not meet the highest fire safety standards and which may interfere with sound absorption performance.

There is therefore a need for improved acoustic barriers which solve one or more of the above identified issues.

### SUMMARY OF THE INVENTION

The present invention provides an acoustic curtain comprising a panel of sound absorbent material within an envelope formed from polymeric sheets, with means for attaching adjacent panels to one another, wherein the polymeric sheets comprise a woven glass fibre fabric coated or impregnated with a halogen free polymeric material, which material comprises polyurethane and aluminium.

### BRIEF DESCRIPTION OF THE DRAWINGS

Preferred embodiments of the invention will be described with reference to the accompanying drawings. The present invention is in no way restricted by these embodiments, and they are merely demonstrations of the invention by way of example only.
Figure 1 is a front perspective view of an acoustic curtain in accordance with the invention.
Figure 2 is a rear elevation of the curtain of Figure 1 when hung vertically.
Figure 3 is a cross-section on the line 111-111 of Figure 2.
Figure 4 is a perspective of an acoustic curtain in accordance with another embodiment of the invention.
Figure 5 is an enlarged detail of the curtain of Figure 4 with a pocket flap open.

### DETAILED DESCRIPTION

The polymeric sheet of the present invention comprises a woven glass fibre fabric coated or impregnated with a halogen free polymeric material which comprises polyurethane and aluminium. The present inventor has realised that this specific combination of components can be capable of Class O fire rating in accordance with the BS 6853:1999, as well as excellent acoustic attenuation properties. Such an acoustic curtain enables work in a sub-surface environment, for example an underground transport network, controlling noise pollution and protecting those working within the noisy area and the surrounding work force.

Preferably, the uncoated woven glass fibre fabric has a warp tensile strength of 1000 to 1200 N/cm, and a weft tensile strength of 600 to 700 N/cm in accordance with ISO 4606. As well as providing a heat reflecting surface, the polymeric sheets of the acoustic curtain provide high resistance to abrasion, flexing tear and puncture. The acoustic curtain of the present invention can therefore be used as smoke and fire curtains, blinds, cavity wall barriers and other types of smoke and fire control systems. Being halogen free, the curtain has improved resistance to hydrolysis and avoids the toxic fumes accompanying such materials when exposed to fire and other hazards, such as corrosive chemicals.

The sound absorbent material is preferably an acoustic foam, which is therefore light in weight and makes the whole curtain flexible. Most preferred is a foam comprising melamine. Such an open cell foam with a fine and uniform cell structure offers excellent sound absorption properties, as well as contributing to fire resistance.

The aluminium is preferably added as a pigment. The content of aluminium may be in the range of 0.1 wt% to 30 wt% of the polymeric material, 0.5 wt% to 15 wt% of the polymeric material or 2 wt% to 5 wt% of the polymeric material.

In a preferred form, the invention provides an acoustic curtain comprising two or more said panels sealed within adjacent envelopes in a common polymeric sheet and spaced from one another, whereby the curtain can be folded between adjacent panels of the curtain. In one such embodiment the panels are of equal size, in another, one panel is smaller than the other to enable the curtain to be draped over a fence or the like with most of the curtain on one side.

Each panel of sound absorbent material is retained within an envelope formed by two sheets of the polymeric material. The overall thickness of each sound absorbent panel is preferably in a range from 25 mm to 60 mm, typically 50 mm.

In some embodiments, the polymeric envelope containing each sound absorbent panel is formed on one side of a solid polymeric material and on the other side a perforated material such as netting. The perforated side is positioned to face the source of noise, allowing the sound waves to penetrate the perforated layer and to be absorbed by the acoustic material. Sound waves penetrating the acoustic material are reflected back into it by the solid sheet behind it. The polymeric sheets can be sealed together by welding. Additionally or alternatively the sheets can be stitched, preferably with an aramid fibre.

To connect adjacent acoustic curtains together, suitable fastening means are provided along edges of adjacent panels, for example strips of hook and loop fastening material such as that sold under the trademark VELCRO®.

Suspension eyelets may also be provided in corners and/or along one or more edges of each curtain for securing it on site. Additionally or alternatively, the acoustic curtain can include one or more magnetic elements, in particular two or even more magnetic elements per panel to ensure a balanced attachment, for example to metal scaffolding on a building site. Preferably the magnetic element or elements are in the corners of the acoustic curtain to easily align the curtain, but can also be placed alternatively or additionally along the edges of the acoustic curtain, to further facilitate fixing the curtain in position.

While not especially limited, it is preferred that the magnetic element is embedded, such as welded, in the curtain so that the magnetic element acts through a portion of the acoustic barrier to magnetically hold the acoustic barrier to the desired site. This ensures the magnet itself is integral to the curtain, thus less susceptible to any movement or any additional steps in attachment.

The magnetic element preferably has a pull force of 6.5 to 9 kg, preferably 6.9 to 8.6 kg, and a tolerance of ± 0.1 mm, preferably ± 0.05 mm. It is preferred that the diameter of 20 to 30 mm, preferably 25 mm and the width of 2.5 to 7.5 mm, preferably 5 mm. While not especially limited, it is preferred that the magnetic element comprises neodymium. Preferably the neodymium magnet is of grade N32 to N40, and most preferred is neodymium magnet grade N35 so that the acoustic curtain has sufficient magnetic strength without interfering with any other aspect of acoustic curtain performance. The magnetic element may also be nickel coated to help prevent corrosion. Other magnetic materials include iron and steel.

Use of a magnetic element, ensures instant attachment of the acoustic curtain to the site, typically a construction site such as metal scaffolding. Due to the magnetic attachment any movement of the curtain is also restricted, hence improving sound absorption. Depending on the material, size and number of magnetic elements, they may also be capable of absorbing sound. Hence, the overall combination of features of this arrangement results in more efficient sound absorption.

The acoustic material may be sealed between the two polymer sheets or, more preferably, may be located in pockets.

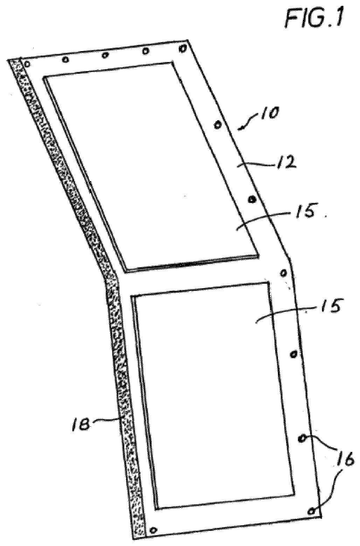

Referring first to Figure 1, an acoustic panel generally indicated by 10 comprises a flexible double layer sheet, each of which is made of woven glass fibre coated with polyurethane comprising aluminium pigment.

The curtain 10 comprises two acoustic panels 15, each formed by a rectangular slab of acoustic material sandwiched between the front and rear layers 12, 22 of the curtain, these layers being stitched and/or bonded together by welding around and between the two acoustic panels. Stitching is preferably with an aramid fibre such as that sold under the registered trade mark Kevlar.

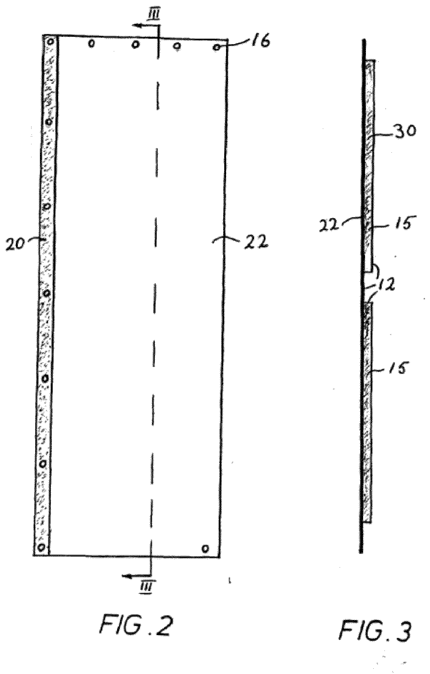

Down one edge of the front sheet 12 is a strip 18 of hook and loop fastening material, to bond with a corresponding strip 20 on the opposite rear surface 22 of an adjacent panel (see Figure 2).

Metal eyes 16 are provided in the four corners and along two edges of the acoustic curtain, to facilitate tying the curtain in position, for example to scaffolding on a building site.

As can best be seen in Figure 3, the acoustic panels 15 comprise dense slabs, preferably square or rectangular, which fit into pockets between the perforated front sheet and the solid back sheet. The panels are made of an acoustic material or preferably an inorganic material such as rock wool or glass fibres. Other materials such as organic polymer fibres or particles could also be used. These panels should be densely packed and relatively rigid, so that they do not bend significantly, even though the curtain as a whole can bend between the two panels, as shown in Figure 1, so that the panel can for example be placed around a corner, or placed over the top and one side of a site generator. The flexibility of the backing sheet also enables the curtain to be folded in half for transportation.

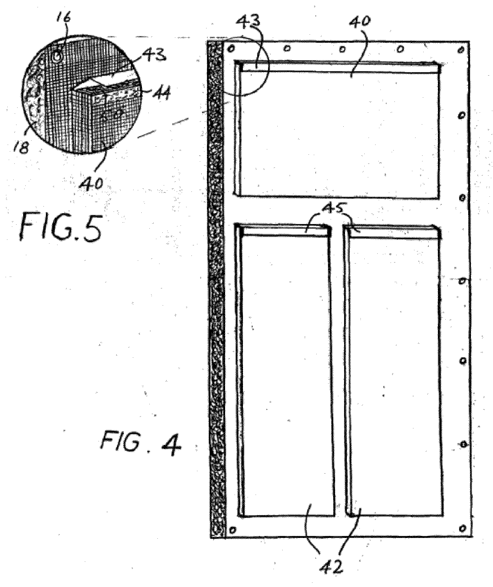

The acoustic curtains of the invention may be provided in any suitable shape or size. For example the curtain shown in Figure 4 comprises two vertical lower panels 42 and a horizontal upper one 44. The general construction of the curtain of Figure 4 is otherwise similar to that of Figures 1 to 3. Since however the fold line in this case is about one third of the way along the length of the curtain, stacking for storage and transport can be facilitated by folding the curtains in two and stacking them in alternate orientations. This version of the curtain is designed to hang on a Heras' or similar type fencing used to surround building sites.

The curtain of Figure 4 differs from that of Figures 1 to 3 in that it has a perforated front layer 12, suitably comprising heavy duty netting and a solid back layer 22 (Figure 2) of polymeric material in accordance with the invention.

The curtain of Figure 4 also differs from that of Figures 1 to 3 in that instead of being sealed in between the two sheets the acoustic material is retained in pockets, each closed along one edge by a flap 43, 45, so that worn or damaged acoustic material can be replaced. It will be understood that panels of other materials, such as those described in relation to Figures 1 to 3 may also have this construction.

As can be more easily seen in Figure 5, the acoustic material 50, which may be in the form of an integral slab or sheet, fits into a pocket formed by the perforated front PVC sheet 40, and is retained by a flap 43 by a hook and loop (e.g. VELCRO) connection 44.

Curtains of the invention may suitably be from 1.5m to 2.5m in height and from 60cm to 1.5m in width. Each acoustic panel may suitably be from 50cm to 120cm in each direction. The areas around and between the acoustic panels may suitably be from 10cm to 15cm in width, and the hook and loop fastening strips are preferably from 6cm to 15cm in width. A 10cm overlap between adjacent curtains ensures a secure join while also providing an efficient continuous sound barrier.

In use, the acoustic curtains of the invention may be hung in rows. In the prior art arrangements this is only done using suspension eyelets 60 to secure them to scaffolding, site fencing or the like, and can be secured together with the fastening strip 18 on the front of each curtain being secured to the complementary strip 20 on the back of the adjacent panel, to form a continuous curtain. The curtain is preferably positioned with the solid layer 22 facing outwards and the perforated layer 12 facing the source of noise.

## Claims

1. An acoustic curtain comprising a panel of sound absorbent material within an envelope formed from polymeric sheets, with means for attaching adjacent panels to one another, wherein the polymeric sheets comprise a woven glass fibre fabric coated or impregnated with a halogen free polymeric material, which material comprises polyurethane and aluminium.

2. An acoustic curtain according to claim 1, wherein the sound absorbent material comprises acoustic foam.

3. An acoustic curtain according to claim 2, wherein the acoustic foam comprises melamine.

4. An acoustic curtain according to any preceding claim, wherein the acoustic curtain is Class O fire rated.

5. An acoustic curtain according to any preceding claim, wherein the woven glass fibre fabric has a warp tensile strength of 1000 to 1200 N/cm, and a weft tensile strength of 600 to 700 N/cm.

6. An acoustic curtain according to any preceding claim, wherein said polymeric sheets further comprise a chemical-resistant polymer.

7. An acoustic curtain according to claim 1 wherein two or more said acoustic panels are sealed within adjacent envelopes in a common polymeric sheet and spaced from one another, whereby the curtain can be folded between adjacent panels of the curtain.

8. An acoustic material according to any preceding claim, wherein the polymeric sheets are sealed together by welding to form said envelopes, or wherein said polymeric sheets are stitched together to form said envelopes.

9. An acoustic curtain according to any preceding claim, wherein at least one said envelope has an opening flap at one end to allow insertion or removal of acoustic material therefrom.

10. An acoustic curtain according to any preceding claim, wherein the curtain comprises a magnetic element.

11. An acoustic curtain according to claim 10, wherein the magnetic element is embedded in the curtain.

12. An acoustic curtain according to any of claims 10 to 11, wherein the magnetic element has any of the following properties:
(i) pull force of 6.5 to 9 kg, preferably 6.9 to 8.6 kg; and/or
(ii) tolerance of ± 0.1 mm, preferably ± 0.05 mm

13. An acoustic curtain according to any of claims 10 to 12, wherein the magnetic element has the following dimensions:
(i) diameter of 20 to 30 mm, preferably 25 mm; and/or
(ii) width of 2.5 to 7.5 mm, preferably 5 mm.

14. An acoustic curtain according to any of claims 10 to 13, wherein the magnetic element comprises neodymium, preferably magnet grade N35.
